# EUROPEAN PATENT APPLICATION

(11) **EP 2 717 135 A1**
(43) Date of publication of application: **09.04.2014**
(21) Application number: 11866044.8
(22) Date of filing: 08.07.2011
(51) Int. Cl.: G06F 3/044

(54) **METHOD FOR SIMULATING KEY INPUT USING CAPACITIVE STYLUS, CAPACITIVE STYLUS AND TERMINAL**

(30) Priority: 25.05.2011 CN 201110135911
(71) Applicant: ZTE Corporation, Shenzhen, Guangdong 518057 (CN)
(72) Inventor: CAO, Yusheng, Shenzhen Guangdong 518057 (CN); FANG, Wen, Shenzhen Guangdong 518057 (CN)
(74) Representative: Modiano, Micaela Nadia
(86) International application number: PCT/CN2011/076984
(87) International publication number: WO 2012/159323

(57) **Abstract**

The present document provides a method for stimulating left key input and right key input using a capacitive screen stylus, which is applied to a terminal provided with a capacitive screen. The method includes: after receiving a command of a user selecting to perform left key input or right key input, the capacitive screen stylus outputting an electric signal corresponding to the command; and the terminal, if determining that the capacitive screen receives the electric signal through contact with the capacitive screen stylus, executing the input command of the user according to an input mode corresponding to the electric signal. The technical problem of being unable to perform the left key input and right key input conveniently in the related art is solved.

## Description

### Technical Field

The present document mainly relates to the electronic application field, and in particular, to a method for simulating left key input and right key input using a capacitive screen stylus, a capacitive stylus and a terminal.

### Background of the Related Art

In the feld of electronic product terminal handwriting input, there are two kinds of most common schemes at present: one is the resistance screen input, and the other is the capacitive screen input.

The principle of the resistance screen input mode is that: when the stylus writes on the touch screen, the change of the contact pressure makes the contact part of the screen deform, thus changing the resistance value of this point, and further detecting and calculating the writing position through the resistance value changes of the four angles of the screen. The characteristic of the resistance screen lies in that: there is no special requirement for the input device, and the price is comparatively low, but it cannot support identifying of multi-point touch. This mode is applied extensively in a large number of low-end touch screen mobile phones at present.

The principle of the capacitive screen input mode is that: a capacitive sensing device is built in the screen, when the object with the electric charge is close enough, the relevant position of the capacitive sensing device will produce the induced charge, and the operation position is judged through detecting the rank to which the induced charge belongs. The capacitive screen can support the multi-point touch screen, but has certain requirements for the input mediums; generally speaking, only the material with the electric charge can perform the input, the common mode is the finger input, and there are also some technologies using a special stylus to perform the input at present.

On the other hand, with the production of the Pad (tablet PC) type products, the mobile terminal is more and more close to the tablet PC; the iPad issued by Apple has a function of being used after connecting a keyboard through its interface. Apple applied the patent for a double-base interface iPad (the application number of American patent is USD627777S1) in China, Europe, and U.S.A., and one of its purposes is to make iPad expanding the keyboard more conveniently in the landscape state. The Pad added with the keyboard has already had some rudiment of the tablet PC; if further added with the left and right key control mode, that is, simulating the left and right key control method of the computer mouse, it will be closer to the computer.

In the stylus field, there is little technology that can detect the left key and right key in writing and operation at present; for example, the stylus and its input method with an application number CN200810217607.X simulate the left key input and right key input by detecting the inclination angle of the stylus when writing. For example: if the stylus is leftwards inclined while clicking, then it is judged to be the left key input; if inclined right, then it is judged to be right key input. That method can be used on both the resistance screen and the capacitive screen, but its operation method does not match the user habit, and the user experience is not friendly enough.

In the field of the capacitive screen specialized stylus, there still no patent and existing technology simulating the left and right key of the mouse at present.

### Summary of the Invention

The objective of the present document is to provide a method for simulating left key input and right key input using a capacitive stylus, a capacitive stylus and a terminal, in order to overcome the disadvantage that the existing capacitive screen handwriting input is unable to perform the left key input and right key input conveniently.

In order to solve the above-mentioned problem, the present document provides a method for simulating left key input and right key input using a capacitive screen stylus, applied to a terminal provided with a capacitive screen, comprising:
after receiving a command of a user selecting to perform left key input or right key input, the capacitive screen stylus outputting an electric signal corresponding to the command; and
the terminal, if determining that the capacitive screen receives the electric signal through contact with the capacitive screen stylus, then executing an input command of the user according to an input mode corresponding to the electric signal.

Preferably, the above-mentioned method further comprises:
if the electric signal corresponds to neither a left key input mode nor a right key input mode, then the terminal executing the input command of the user according to an input mode of a non-left and right key input.

Preferably, in the above-mentioned method:
any one or any combination of frequency, amplitude or phase of the electric signal corresponding to the left key input mode output by the capacitive screen stylus is different from that of the electric signal corresponding to the right key input mode.

Preferably, in the above-mentioned method: at least one of the electric signal corresponding to the left key input mode and the electric signal corresponding to the right key input mode is a modulated electric signal.

The present document further provides a capacitive screen stylus, comprising: a power module, a left and right key switchover input module, a control module and an electric signal transmission module; wherein,
the power module is configured to: supply power for the left and right key switchover input module, the control module and the electric signal transmission module;
the left and right key switchover input module is configured to: according to the received command of a user selecting to perform left key input or right key input, send corresponding operation information to the control module;
the control module is configured to: receive the operation information sent by the left and right key switchover input module, and output corresponding modulation mode information according to the operation information; and
the electric signal transmission module is configured to: transmit a corresponding electric signal according to a modulation mode indicated by the received modulation mode information.

Preferably, in the above-mentioned capacitive screen stylus:
the left and right key switchover input module is further configured to: adopt a left and right toggle slider, a double throw switch, a single key switch or a double key selection switch structure.

Preferably, in the above-mentioned capacitive screen stylus:
any one or any combination of frequency, amplitude or phase of the electric signal corresponding to the modulation mode information corresponding to the command of left key input is different from that of the electric signal corresponding to the modulation mode information corresponding to the command of right key input.

The present document further provides a capacitive screen stylus, comprising: a power module, a left and right key switchover input module, a control module and a housing made of a conductive material; wherein,
the power module is configured to: supply power for the left and right key switchover input module and the control module,
the left and right key switchover input module is configured to: according to the received command of a user selecting to perform left key input or right key input, send corresponding operation information to the control module;
the housing is configured to: conduct electric charges carried by limbs of the user to the control module; and
the control module is configured to: receive the operation information sent by the left and right key switchover input module and the electric charge conducted by the housing, and output an electric signal according to the operation information.

Preferably, in the above-mentioned capacitive screen stylus: the control module is configured such that: any one or any combination of frequency, amplitude or phase of the electric signals output according to different operation information is different.

Preferably, in the above-mentioned capacitive screen stylus, at least one of the electric signal output according to the operation information corresponding to the command of left key input and the electric signal output according to the operation information corresponding to the command of right key input is an electric signal modulated by the control module.

Preferably, in the above-mentioned capacitive screen stylus:
the left and right key switchover input module is further configured to: adopt a left and right toggle slider, a double throw switch, a single key switch or a double key selection switch structure.

The present document further provides a terminal, comprising: a capacitive screen, a detection module and an execution module; wherein,
the detection module is configured to: send an execution command to the execution module after determining that the capacitive screen receives an electric signal used for representing a left key input mode or a right key input mode through contact with a stylus; wherein, the execution command is used to instruct the execution module to execute an input command according to an input mode represented by the electric signals; and
the execution module is configured to: execute the input command according to the received execution command.

Preferably, in the above-mentioned terminal:
any one or any combination of frequency, amplitude or phase of the electric signal used for representing the left key input mode is different from that of the electric signal used for representing the right key input mode.

The present document, through adding the modulation device, etc., into the stylus, makes the user perform the left and right key input operations on the stylus conveniently, makes some functions of the mobile phone be closer to the tablet PC, and also provides a practical platform of flexibly performing the left and right key operation for the user. In addition, in the implementation of the present document, if the technical scheme that the modulation modes of the two keys, the left key and the right key, are different from that of the normal stylus input is adopted, then it will play a certain encryption function, that is, only that stylus can be used to operate on the touch screen of the mobile phone, and even if the mobile phone is lost, the other person is unable to operate the mobile phone if he or she does not have specialized stylus, which plays a certain function of information security objectively.

### Brief Description of Drawings

FIG. 1 is a flow chart of a method for simulating left key input and right key input using a capacitive stylus according to an example of the present document;
FIG. 2 is a processing flow chart of a capacitive stylus part according to an example of the present document;
FIG. 3 is a processing flow chart at a terminal part according to an example of the present document;
FIG. 4 is a structure diagram of a capacitive stylus according to an example of the present document;
FIG. 5 (a) ∼ (c) are several structure diagrams of a left and right key switchover input module in a stylus according to an example of the present document;
FIG. 6 (a) and (b) are diagrams of two modulation signals respectively corresponding to left key input and right key input output by a capacitive stylus according to an example of the present document.

### Preferred Embodiments of the Invention

In order to make the objective, technical scheme and advantage of the present document much clearer and more obvious, the examples of the present document will be described in detail with reference to the accompanying drawings hereinafter. It should be illustrated that, in the case of not conflicting, the embodiments in the present application and features in these embodiments can be combined with each other.

The simulating for the left key input and right key input described in the present document refers to simulating clicking input by the left and right key of the mouse.

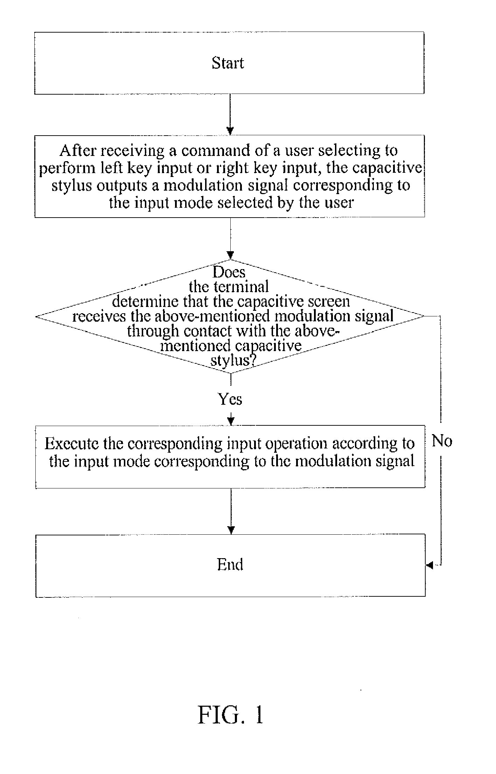

In the present embodiment, a method for simulating left key input and right key input using a capacitive stylus is applied to a terminal provided with a capacitive stylus, and the terminal is provided with a capacitive screen; as shown in FIG. 1, the method includes the following steps:
1. after receiving a command of a user selecting to perform left key input or right key input, the capacitive stylus outputs a modulation signal corresponding to the input mode selected by the above-mentioned user; and
2. the terminal, if determining that the capacitive screen receives the above-mentioned modulation signal through contact with the above-mentioned capacitive stylus, executes a corresponding input operation according to an input mode corresponding to the modulation signal. That is, if the modulation signal corresponds to the left key input mode, then the left key input operation is executed; if the modulation signal corresponds to the right key input mode, then right key input operation is executed; and if determining that the capacitive screen does not receive the modulation signal, then it does not respond, and the method ends.

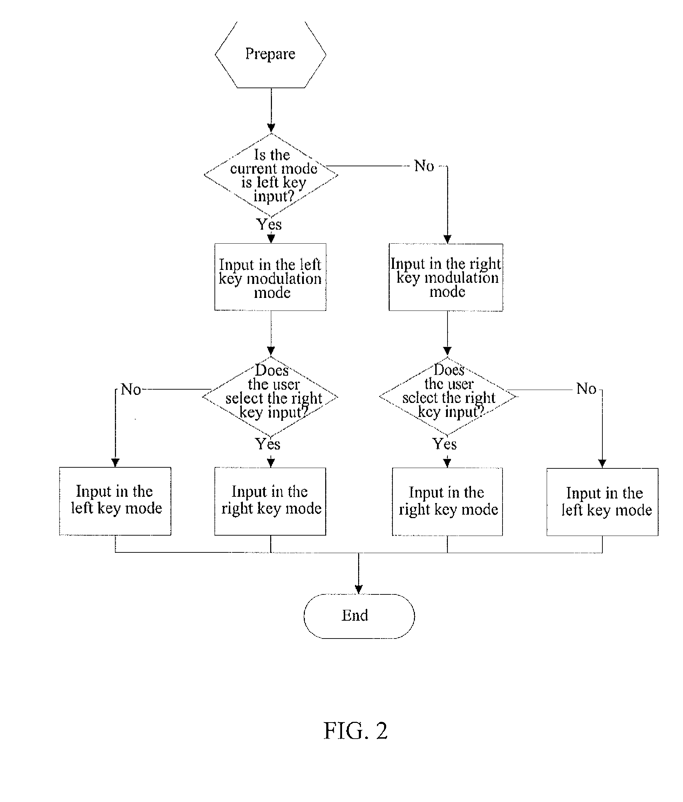

FIG. 2 shows a processing flow of a capacitive stylus part according to the present embodiment. The capacitive stylus is provided with the function of switching the left key output and right key output, including:
supposing that the current output mode is the left key (right key) output, when the user selects to adjust the output mode to be the right key (left key) output, the capacitive stylus changes the modulation mode to the electric signal corresponding the output right key (left key) mode;
supposing that the current output mode is the left key (right key) output, when the user selects the left key (the right key) output again, the capacitive stylus does not respond, and still outputs the electric signal corresponding to the original mode.

Because different user control modes exist, the above-mentioned procedures may not be suitable for all situations, for example, when the left and right slider or the double throw switch is used to perform the left and right key input mode selections, there is no situation that the user selects to perform the left key input again under the state of the left key. But various situations can at least accord with some branch procedures or nodes in the present flow chart.

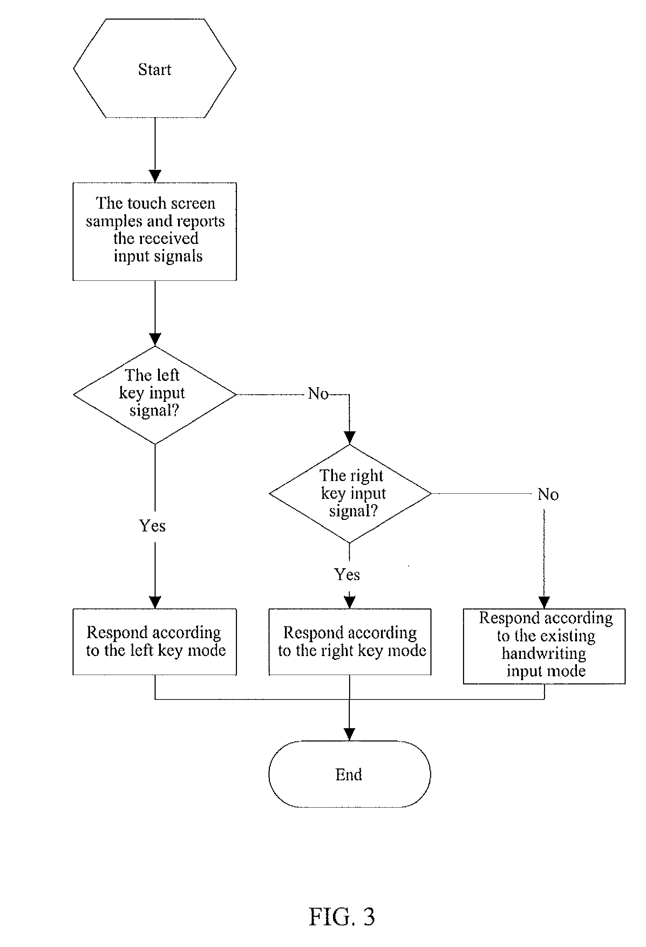

FIG. 3 shows a relevant procedure of a terminal with a capacitive screen in the present example, including the following steps:
1, the terminal as shown in the present example performs multi-cycle sampling according to the sampling cycle and sampling number agreed and contracted in advance after monitoring that there is a capacitive stylus performing input on the capacitive screen;
2, the sampling result is identified; if the result is matched with the left key input signal appointed by protocol, then the left key input operation of the capacitive stylus is executed; otherwise, next step is executed;
3, if the result is matched with the right key input signal appointed by protocol, then the right key input operation of the capacitive stylus is executed; otherwise, next step is executed;
4, if the sampling result is matched with neither the existing left key input signal nor the right key input signal, then processing is performed according to a non-left and right key input mode.

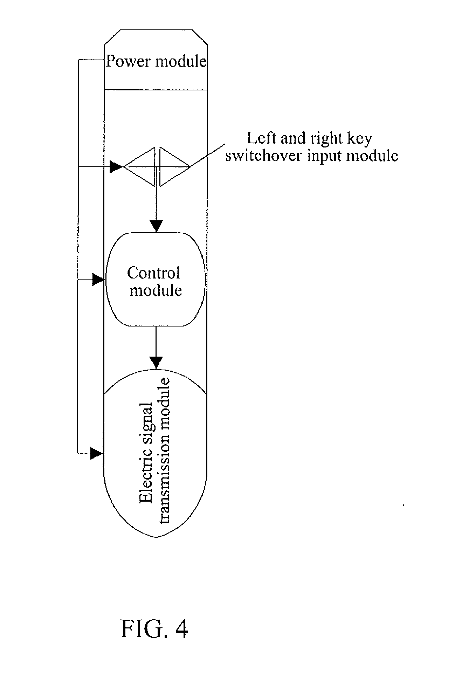

FIG. 4 shows a structure diagram of a capacitive stylus according to the present example. The capacitive stylus is composed of a power module, a left and right key switchover input module, a control circuit module and an electric signal transmission module.

The power module is configured to: supply power for the left and right key switchover input module, the control circuit module and the electric signal transmission module in the stylus, and provides the necessary power required by the capacitive stylus for work;
the left and right key switchover input module is the input part of the user operation, and this part is configured to receive the left and right control operation sent by the user and send the corresponding operation information; when the user uses the left and right key switchover input structure, the stylus can realize the function of controlling the left and the right key input separately; at present, the stylus can also have other implementation modes in addition to the form in which the left and right keys are set separately provided by the present figure;
the control module is a core control and modulation module in the capacitive stylus, and it receives the operation information sent by the left and right key switchover input module, and outputs the corresponding modulation mode information according to the information to control the electric signal transmission module to send the corresponding electric signal to the terminal; in the present embodiment, the modulation mode is not limited, and it can be the mode such as frequency, amplitude or phase, etc., and also can be the mode such as the simplest switching pulse, etc., so long as the mutual agreement of the terminal and the capacitive stylus is achieved;
the electric signal transmission module is configured to transmit a corresponding electric signal according to a modulation mode indicated by the modulation mode information after receiving the modulation mode information sent by the control module; and the electric signal has a certain strength to enable the capacitive screen on the terminal to sense it normally.

If the terminal receives the modulated electric signal and is able to identify and respond correctly, then the corresponding input process is finished.

It should be explained that, if the housing of the capacitive stylus is made of a conducting material, then the inside of the capacitive stylus can only be provided with the power module, the left and right key switchover input module and the control circuit module, without the electric signal transmission module. Wherein, the functions of the power module and the left and right key switchover input module are the same as in the above-mentioned example, and the electric signal output by the control circuit module should be the electric signal introduced into the capacitive stylus by the user using the stylus.

The control circuit module can modulate the electric signal directly by means of controlling the whole circuit to open and close. Specifically speaking, the user hand contacts the housing part of the capacitive stylus and is conducted with the pen point through the control circuit module of the stylus; in this way, if the capacitive stylus is not provided with the control circuit module, which is equivalent to the user holding a metal pen, the pen point of the metal pen conducts the electricity on the user hand to the touch screen, and realizes the input. When the control circuit module is provided, the control circuit module can control whether the conductor path from the user hand to the pen point is open, and further can realize transmitting the electric signal to the terminal in a manner of opening and closing at a particular frequency; that is,an electric signal performing the high-low level switch at a certain frequency is transmitted to the terminal. The terminal identifies the corresponding left and right key input modes by the frequency of the high-low level switch, and then performs the corresponding operation.

In the present embodiment, a terminal includes: a capacitive screen, a detection module and an execution module; wherein,
the detection module is configured to: determine that a capacitive screen receives a modulation signal used for representing a left key input mode or a right key input mode through contact with a capacitive stylus, and then send an execution command to the execution module; wherein, the execution command is used to instruct the execution module to execute an input action according to an input mode represented by the modulation signal; and
the execution module is configured to: execute the corresponding input action according to the above-mentioned execution command.

Preferably, any one or any combination of the frequency, amplitude or phase of the modulation signal used for representing the left key input mode is different from that of the modulation signal used for representing the right key input mode.

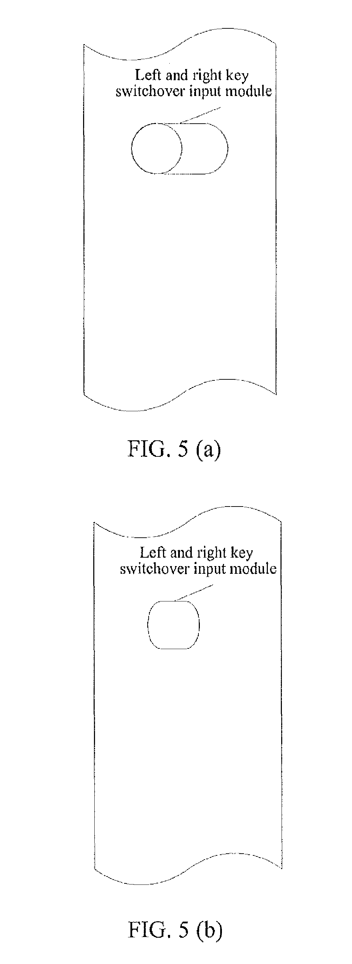

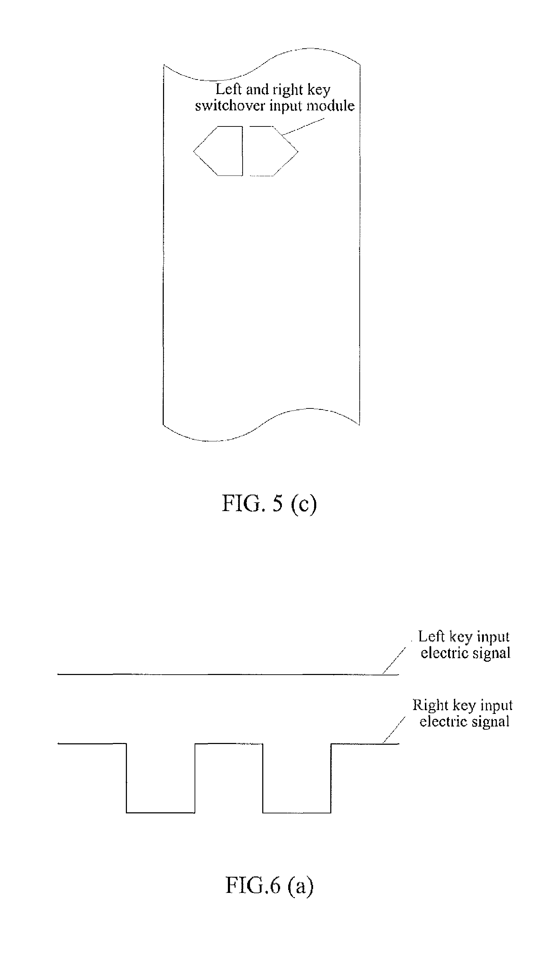

FIG. 5 are the examples of several specific implementations of the left and right key switchover input module illustrated in the present example; wherein,
FIG. 5 (a) is an example of selecting the left key input and right key input by the left and right toggle slider or the double throw switch; in the present example, the user stirs the slider or the double throw switch to the left side, which indicates the left key input; while stirring to the right side indicates the right key input;
FIG. 5 (b) is the example that the operation mode is switched by a single key; in the present example, for example, the current state is the left key (right key) input, and it is switched over to the right key (left key) input when the user clicks that key;
FIG. 5 (c) is the example that the operation mode is selected using double keys; in the present example, the stylus outputs by way of the left key when the user clicks the left key, and the stylus outputs by way of the right key when the user clicks the right key.

There may be other situations of the operation examples. It is impossible to list all situations here due to the length of the article, but all other examples in conformity with the idea of the present document should be within the protection scope of the present document.

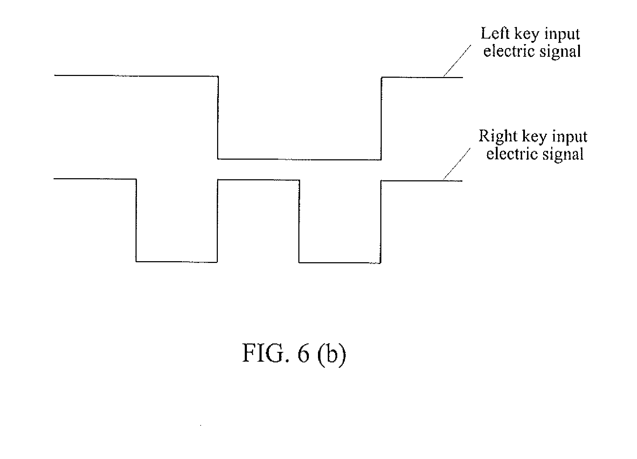

FIG. 6 are example diagrams of different modulation methods corresponding to the left key output and right key output.

In FIG. 6 (a), the unchanged electric signal represents the left key input, and the electric signal of 0-1 with a certain frequency and quantity represents the right key input. Its characteristic lies in that, when there is no the stylus of the present document, the user can also perform the left key operation on the capacitive screen by using other ways such as the finger. Generally speaking, it can be called the modulation mode.

In FIG. 6 (b), the electric signal of 0-1 of low frequency represents the left key input, and electric signal of 0-1 of high frequency represents the right key input. Its characteristic lies in that, this way has totally eradicates the possibility of some other handwriting input operation modes such as the finger; because the non-special stylus is unable to send the electric signal of 0-1 to the touch screen, so only the stylus described in the present example can make the terminal screen operation produce response, therefore, it has a certain encryption and secrecy function.

FIG. 6 only shows the examples of two modulation modes. Those skilled in the art should know that the existing modulation modes vary in size and classification, and modulation in such as phase and amplitude, etc., in addition to the above-mentioned embodiment, can also be implemented. It is impossible to list all examples here. Any mode, , so long as it complies with the basic spirit of the present document, should be within the described scope of the present document.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present document is not limit to any specific form of the combination of the hardware and software.

The above description is only the preferred embodiments of the present document and is not intended to limit the protection scope of the present document. The present document can have a variety of other embodiments according to the content of the invention. Those skilled in the art can make corresponding modifications and variations according to the present document without departing from the spirit and essence of the present document. All of modifications, equivalents and/or variations made without departing from the spirit and essence of the present document should be included in the scope of the appended claims of the present document.

### Industrial Applicability

The present document provides method for simulating the left key input and right key input by using the capacitive stylus, a capacitive stylus and a terminal, in order to overcome the disadvantage that the existing capacitive screen handwriting input is unable to perform the left key input and right key input. The present document, through adding the modulation device, etc., into the stylus, makes the user perform the left and right key input operations on the stylus conveniently, makes some functions of the mobile phone be closer to the tablet PC, and also provides a practical platform of flexibly performing the left and right key operation for the user. In addition, in the implementation of the present document, if the technical scheme that the modulation modes of the two keys, the left key and the right key, are different from that of the normal stylus input is adopted, then it will play a certain encryption function, that is, only that stylus can be used to operate on the touch screen of the mobile phone, and even if the mobile phone is lost, the other person is unable to operate the mobile phone if he or she does not have specialized stylus, which plays a certain function of information security objectively.

## Claims

1. A method for simulating left key input and right key input using a capacitive screen stylus, applied to a terminal provided with a capacitive screen, comprising:
after receiving a command of a user selecting to perform left key input or right key input, the capacitive screen stylus outputting an electric signal corresponding to the command; and
the terminal, if determining that the capacitive screen receives the electric signal through contact with the capacitive screen stylus, then executing an input command of the user according to an input mode corresponding to the electric signal.

2. The method according to claim 1, further comprising:
if the electric signal corresponds to neither a left key input mode nor a right key input mode, then the terminal executing the input command of the user according to an input mode of a non-left key input and right key input.

3. The method according to claim 1, wherein,
any one or any combination of frequency, amplitude or phase of the electric signal corresponding to the left key input mode output by the capacitive screen stylus is different from that of the electric signal corresponding to the right key input mode.

4. The method according to claim 3, wherein, at least one of the electric signal corresponding to the left key input mode and the electric signal corresponding to the right key input mode is a modulated electric signal.

5. A capacitive screen stylus, comprising: a power module, a left and right key switchover input module, a control module and an electric signal transmission module;
the power module is configured to: supply power for the left and right key switchover input module, the control module and the electric signal transmission module;
the left and right key switchover input module is configured to: according to the received command of a user selecting to perform left key input or right key input, send corresponding operation information to the control module;
the control module is configured to: receive the operation information sent by the left and right key switchover input module, and output corresponding modulation mode information according to the operation information; and
the electric signal transmission module is configured to: transmit a corresponding electric signal according to a modulation mode indicated by the received modulation mode information.

6. The capacitive screen stylus according to claim 5, wherein,
the left and right key switchover input module is further configured to: adopt a left and right toggle slider, a double throw switch, a single key switch or a double key selection switch structure.

7. The capacitive screen stylus according to claim 5, wherein,
any one or any combination of frequency, amplitude or phase of the electric signal corresponding to the modulation mode information corresponding to the command of left key input is different from that of the electric signal corresponding to the modulation mode information corresponding to the command of right key input.

8. A capacitive screen stylus, comprising: a power module, a left and right key switchover input module, a control module and a housing made of a conductive material;
the power module is configured to: supply power for the left and right key switchover input module and the control module;
the left and right key switchover input module is configured to: according to a received command of a user selecting to perform left key input or right key input, send corresponding operation information to the control module;
the housing is configured to: conduct electric charges carried by limbs of the user to the control module; and
the control module is configured to: receive the operation information sent by the left and right key switchover input module and the electric charge conducted by the housing, and output an electric signal according to the operation information.

9. The capacitive screen stylus according to claim 8, wherein, the control module is configured such that: any one or any combination of frequency, amplitude or phase of the electric signals output according to different operation information is different.

10. The capacitive screen stylus according to claim 9, wherein, at least one of the electric signal output by the control module according to the operation information corresponding to the command of left key input and the electric signal output by the control module according to the operation information corresponding to the command of right key input is an electric signal modulated by the control module.

11. The capacitive screen stylus according to claim 8, wherein,
the left and right key switchover input module is further configured to: adopt a left and right toggle slider, a double throw switch, a single key switch or a double key selection switch structure.

12. A terminal, comprising: a capacitive screen, a detection module and an execution module;
the detection module is configured to: send an execution command to the execution module after determining that the capacitive screen receives an electric signal used for representing a left key input mode or a right key input mode through contact with a stylus; wherein, the execution command is used to instruct the execution module to execute an input command according to an input mode represented by the electric signal; and
the execution module is configured to: execute the input command according to the received execution command.

13. The terminal according to claim 12, wherein,
any one or any combination of frequency, amplitude or phase of the electric signal used for representing the left key input mode is different from that of the electric signal used for representing the right key input mode.
